**Europäisches Patentamt**

(19) **European Patent Office**

**Office européen des brevets**

(11) Publication number: **0 005 990**
**A1**

(12) # EUROPEAN PATENT APPLICATION

(21) Application number: **79300981.2**

(51) Int. Cl.²: **B 62 J 1/20**

(22) Date of filing: **29.05.79**

(30) Priority: **31.05.78 GB 2529878**
**29.09.78 GB 3878578**

(43) Date of publication of application:
**12.12.79 Bulletin 79/25**

(84) Designated Contracting States:
**BE CH DE FR LU NL SE**

(71) Applicant: **PULLEY BROTHERS LIMITED**
**40 Bracebridge Street**
**Newtown Birmingham B6 4JP(GB)**

(72) Inventor: **Pulley, Arthur**
**391 Walmley Road**
**Sutton Coldfield West Midlands(GB)**

(72) Inventor: **Pulley, Roy Stanley**
**7 South Drive Lichfield Park**
**Sutton Coldfield West Midlands(GB)**

(72) Inventor: **Homer, Robert**
**47 King Charles Road**
**Halesowen West Midlands(GB)**

(74) Representative: **Skerrett, William Gordon et al,**
**H. N. & W. S. SKERRETT Rutland House 148 Edmund**
**Street**
**Birmingham B3 2LQ(GB)**

(54) **A method of repairing or modifying saddles and seats for motor-cycles and cycles; and units for use in such method.**

(57) A method of repairing or modifying a saddle or seat for a motor-cycle or cycle, having a metal base pan (102), resilient filling or cushioning material supported by the pan (102), and a cover or skin which covers the filling or cushioning material, comprises: stripping away the existing filling or cushioning material and the existing cover or skin from the metal base pan (102), and then securing to said pan (102), by securing means, a replacement unit (101) comprising a moulded pan (105) of plastics material for seating on the metal pan (102), resilient filling or cushioning material (106) supported by said plastics pan (105), and a cover or skin (107) which covers the filling or cushioning material (106) of said replacement unit (101). The method enables the original cover or skin, and the original filling or cushioning material, on the metal pan (102) to be replaced quickly and inexpensively. Since the metal pan (102) is retained, the pan (105) of the replacement unit (101) can be inexpensively moulded from light-duty plastics material. In one embodiment the securing means are screw means (109, 110); and in another embodiment the securing means are clips.

FIG.4.

-1-

## A method of repairing or modifying saddles and seats for motor-cycles and cycles; and units for use in such method

This invention relates to a method of repairing or modifying a saddle or seat, for a motor-cycle or cycle, having a metal base pan, resilient filling or cushioning material supported by said pan, and a cover or skin which covers said filling or cushioning material; and to a unit for use in such method. The saddles or seats to which the invention more particularly relates are motor-cycle saddles, motor-cycle pillion seats, and combined saddles and pillion seats for motor cycles.

A conventional form of motor cycle saddle or seat comprises a pressed-metal base pan, resilient filling or cushioning material supported by the metal pan, and a cover or skin which covers the resilient filling or cushioning material and is secured to the metal pan. In the course of time, during use, the cover or skin of such a saddle or seat may split or otherwise require replacement, and the filling or cushioning material may become compressed to such an extent as to require replacement. Hitherto, a usual method of replacement of the cover or skin and/or the

0005990

-3-

according to the invention, a replacement motor-
cycle saddle top or seat-top unit comprising a
moulded pan of light-duty plastics material which
supports resilient filling or cushioning material
covered by a cover or skin secured to said
plastics pan, said plastics pan serving as a
carrier for the filling and cushioning material
whereby the filling and cushioning material and
the cover or skin are held in shape by reason of
the securement of the cover or skin to the plastics
pan, said plastics pan not being, or not needing to
be, of such strength as to constitute a load-
bearing member for adequately supporting by
itself the load when the unit is in place on the
machine and is occupied by the rider or riders, but
said plastics pan being of such form as, when placed
on the metal base pan, to be able to make close or
intimate contact therewith over a sufficiently
large area or areas to provide sufficient load-
bearing support for said plastics pan when the
latter is under load when the unit is in place on
the machine and is occupied by the rider or riders.
Since the plastics pan of such a replacement unit
can be of substantially less cost than a load-
bearing steel pan of similar size, the cost of
repairing a saddle or seat by using such replacement
unit can be considerably less than the cost of
replacing a complete saddle or seat by a saddle or
seat with a heavy-duty metal base pan.

A further advantage of a method according to the
invention is that, in some instances, it does not
require the metal pan to be removed from the
machine.

of the cover or skin to said inner face of the
flange of the metal base pan.

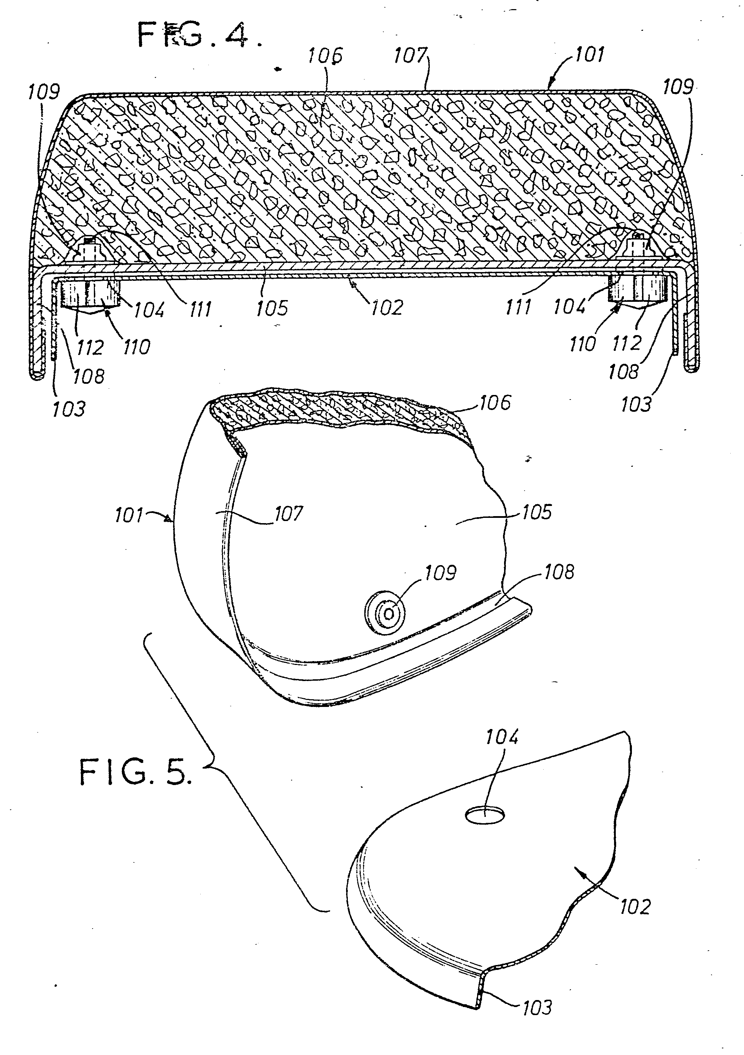

In the accompanying drawings, which show, by way of
example, two embodiments of the invention (the
embodiment shown in Figures 4 and 5 being preferred
to that shown in Figures 1 to 3):-
Figure 1 shows at the left, in underside perspective
view, a replacement motor-cycle saddle-top unit
constructed in accordance with the invention and for
fitting to the existing pressed-metal saddle base
pan shown in perspective view at the right of said
Figure;
Figure 2 is a cross-sectional view showing the
replacement unit shown in Figure 1 fitted to said
metal base pan shown in said Figure, and shows
also a trim strip secured by clips;
Figure 3 shows a portion of Figure 2 on a larger
scale;
Figure 4 is a cross-sectional view showing another
embodiment of the invention; and
Figure 5 shows, at the top, a fragmentary underside
perspective view of the replacement unit shown in
Figure 4, and shows, at the bottom, a fragmentary
top perspective view of the pressed-metal base pan
also shown in said Figure 4.

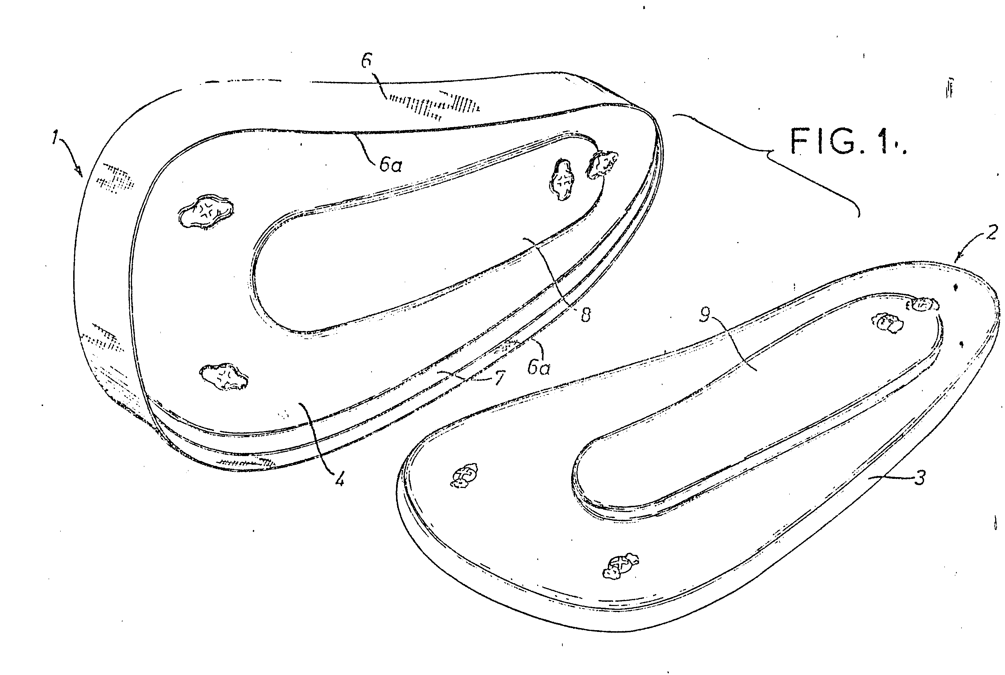

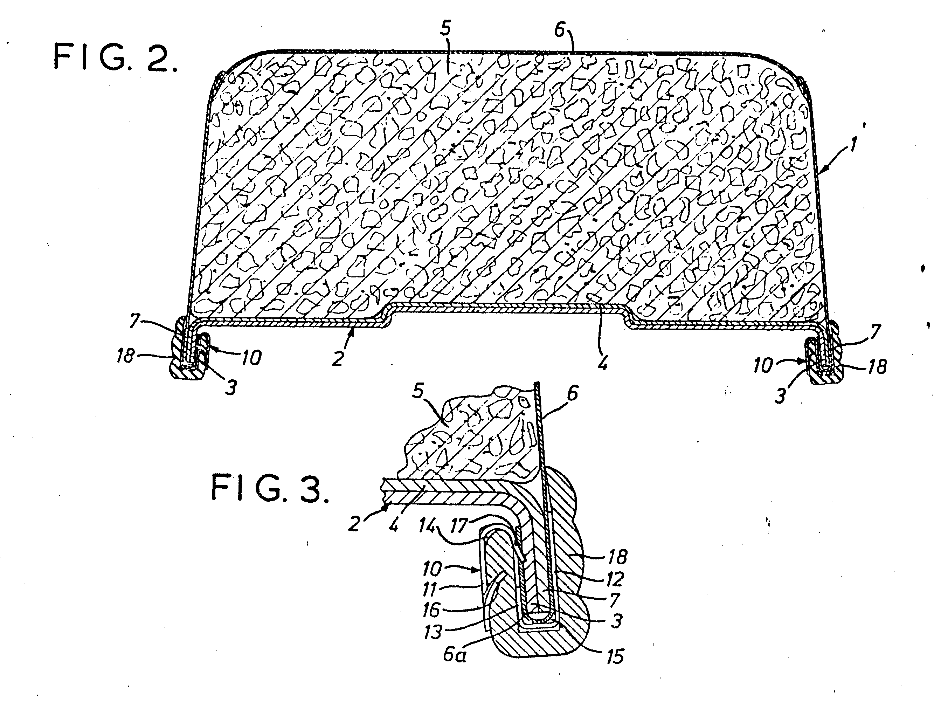

Referring to Figures 1 to 3 of the drawings, a
replacement motor-cycle saddle-top unit 1 is
provided for fitting to an existing pressed-steel
saddle base pan 2 originally supporting resilient
filling or cushioning material and a cover or skin
which covered the filling or cushioning material,
said filling and cushioning material and said cover the two applied-together flanges 3, 7 to lie against the inner face of the flange 3 and is secured in place on said flanges by a suitable number of spring S-clips 10. Each S-clip 10 comprises two spring jaws 11, 12 extending in opposite directions, and a central limb 13 which connects the two jaws 11, 12, whereby the clip 10 has therein two oppositely-directed channels 14, 15. The jaw 11 is provided at its outer end with integral barbs 16 pointing into the channel 14 and at its root end with integral barbs 17 pointing into the other channel 15. In the assembly shown, the clips 10 are positioned so that the channels 15 are securely engaged over the cover or skin folded-over edge portion 6a folded over the, applied-together flanges 3, 7, with the barbs 17 engaging the said edge portion 6a, and with the clips 10 embracing and clipping together the applied-together flanges 3, 7, the parts 12, 13 of said clips applying pressure, through the cover or skin portion 6a, to said flanges 3, 7. After thus securing the cover or skin edge portion 6a and clipping the flanges 3, 7 together by the clips 10, a U-sectioned trim strip 18 is secured to the assembly by engaging said strip 18 into the channels 14 of the clips 10, as shown in Figure 2.

The arrangement shown enables the cover or skin and resilient filling or cushioning which were originally present on the steel pan 2 to be replaced simply and inexpensively.

Although it is preferred that the perimetrical edge 6a of the cover or skin and the flange 7 of the which covers the cusioning material 106. The moulded plastics pan 105 has an integral perimetrical flange 108 which depends adjacent, but outwards of, the flange 103 of the steel pan 102; and in this embodiment the lower edge of the cover or skin is not folded over a part of the steel pan, but is folded over the flange 108 of the plastics pan 105 and has its folded-over edge secured, for example by adhesive, to the inner face of said flange 108, and the unit 101 is in this embodiment secured in place on the steel pan 102 by screw means, not by clips. Said screw means consists of a plurality of internally-threaded members in the form of nuts 109 rigidly non-rotatably mounted on the plastics pan 105 and corresponding in number and positions to the number and positions of the aforesaid holes 104; and a corresponding number of externally-threaded members in the form of screws 110 engaged, through the holes 104, with the nuts 109. The screws 110 consist of studs 111 moulded into rubber heads 112.

The plastics pan 105 serves as a carrier for the filling or cushioning material 106 whereby the material 106 and the cover or skin 107 are held in shape by reason of the securement of the cover or skin 107 to the pan 105, said pan 105 being of a form such as, when placed on the steel pan 102, to make close or intimate contact therewith sufficient to enable the steel pan 102 to provide sufficient load-bearing support for said plastics pan 105 when the latter is under load when the unit 101 is in place on the machine and is occupied. The configuration of the underside of for fitting to the same metal base pan but one being suitable for general purpose use and the other for racing use, and he can then at will quickly interchange one unit with the other when required.

The components of the unit 101 may be of any suitable materials.

If desired, the screw means for securing the unit 101 to the steel base pan 102 may consist of externally-threaded studs non-rotatably carried by, and projecting downwards from, the moulded plastics pan 105, and nuts for screwing on to the lower ends of said screws after inserting said screws downwards through the holes in the steel base pan 102.

If desired, instead of the replacement unit being of a form for fitting to a motor-cycle or cycle saddle base pan, it may be of a form for fitting to the base pan of a pillion seat, or of a combined saddle and pillion seat.

or riders, but said plastics pan being of such form as, when placed on the metal base pan, to be able to make close or intimate contact therewith over a sufficiently large area or areas to provide sufficient load-bearing support for said plastics pan when the latter is under load when the unit is in place on the machine and is occupied by the rider or riders.

3. A method of repairing or modifying a saddle or seat, as claimed in Claim 1, wherein the securing means, for securing the replacement unit to the metal base pan, comprise screw means in the form of internally threaded members (109), and externally-threaded members (110) for insertion through the metal base pan into engagement with said internally-threaded members (109).

4. A method of repairing or modifying a saddle or seat, as claimed in Claim 3, wherein said internally-threaded members (109) are non-rotatably carried by the moulded plastics pan at locations corresponding to the locations of existing holes in the metal base pan, and said externally-threaded members (110) are engageable with said internally-threaded members (109) through said existing holes.

5. A method of repairing or modifying a saddle or seat, as claimed in Claim 4, wherein the externally-threaded members (110) are screws provided with moulded rubber heads (112).

6. A method of repairing or modifying a saddle or seat, as claimed in Claim 1, wherein the moulded or skin to the plastics pan, said plastics pan not constituting a load-bearing member for adequately supporting by itself the load when the unit is in place on the machine and is occupied by the rider or riders, but said plastics pan being of such form as, when placed on the metal base pan, to be able to make close or intimate contact therewith over a sufficiently large area or areas to provide sufficient load-bearing support for said plastics pan when the latter is under load when the unit is in place on the machine and is occupied by the rider or riders.

9. A replacement unit as claimed in Claim 7, in combination with threaded securing means (109, 110) for securing the unit to the metal base pan, said securing means including threaded members (109) non-rotatably carried by the moulded plastics pan at locations corresponding to the locations of existing holes in the metal base pan.

10. A replacement unit as claimed in Claim 7, in combination with securing clips (10) for securing the unit to the metal base pan; wherein the moulded plastics pan of said replacement unit has a depending perimetrical flange (7) for locating over a depending perimetrical flange of the metal base pan, and the cover or skin of the said replacement unit has a lower edge (6a) foldable, when the said flange (7) of the moulded plastics pan is located over the said flange of the metal base pan, to lie against the inner face of said flange of the metal base pan; and wherein said clips (10) are for clipping together said flanges of the moulded

FIG. 1.

1/3

0005990

FIG. 2.

FIG. 3.

0005990

FIG. 4.

FIG. 5.

0005990

**EUROPEAN SEARCH REPORT**

European Patent Office

Application number

EP 79 30 0981

## DOCUMENTS CONSIDERED TO BE RELEVANT

| Category | Citation of document with indication, where appropriate, of relevant passages | Relevant to claim |
|---|---|---|
| | GB - A - 715 742 (THE WRIGHT SADDLE COMPANY LIM.)<br>* Figures 1 to 3; page 1, lines 58 to 88; page 2, lines 1 to 71 *<br>-- | 1,2 |
| | GB - A - 2 225 316 (MESINGER)<br>* Figure 1; right-hand column, lines 42 to 55; page 2, left-hand column , lines 1 to 7 *<br>--<br>-- | 1,2 |
| | US - A - 3 808 075 (WORLEY)<br>* Figures 1 to 6; column 2, lines 62-67; column 3, column 4, lines 1 to 45 *<br>-- | 1 |
| | US - A - 3 388 946 (GRACE)<br>* Figures 1 to 10; column 2, lines 21 to 71; column 3; column 4, lines 1 to 44 *<br>-- | 1,2 |
| A | FR - A - 2 368 394 (STARS STAMPAGGIO RESINE SPECIALI S.P.A.)<br>* Figures 1 to 6; page 7, lines 1 to 14 *<br>---- | 1 |

**CLASSIFICATION OF THE APPLICATION (Int. Cl.²)**

B 62 J    1/20

**TECHNICAL FIELDS SEARCHED (Int.Cl.²)**

B 62 J

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family. corresponding document

The present search report has been drawn up for all claims

| Place of search | Date of completion of the search | Examiner |
|---|---|---|
| The Hague | 29-08-1979 | VANNESTE |

EPO Form 1503.1   06.78